(19) Europäisches Patentamt / European Patent Office / Office européen des brevets

(11) **EP 2 883 482 B1**

(12) **FASCICULE DE BREVET EUROPEEN**

(45) Date de publication et mention
de la délivrance du brevet:
**07.09.2016 Bulletin 2016/36**

(51) Int Cl.:
**A47J 27/05** (2006.01)

(21) Numéro de dépôt: **14197502.9**

(22) Date de dépôt: **11.12.2014**

(54) **Dispositif de cuisson à la vapeur simple et économique permettant deux températures de cuisson**

Einfache und preisgünstige Dampfkochvorrichtung, die zwei Kochtemperaturen erlaubt

Straightforward and inexpensive steam cooking device allowing two cooking temperatures

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **13.12.2013 FR 1362542**

(43) Date de publication de la demande:
**17.06.2015 Bulletin 2015/25**

(73) Titulaire: **SEB S.A.
69130 Ecully (FR)**

(72) Inventeur: **Bourgeois-Jacquet, Jean-Marie
21800 Sennecey-les-Dijon (FR)**

(74) Mandataire: **Cémeli, Eric Philippe Laurent et al
SEB Développement SAS
Campus SEB
112 Chemin du Moulin Carron
69134 Ecully Cedex (FR)**

(56) Documents cités:
**US-A1- 2009 078 125    US-A1- 2011 000 380
US-A1- 2012 247 342**

EP 2 883 482 B1

**Description**

La présente invention se rapporte au domaine technique général des appareils électroménagers prévus pour la cuisson à la vapeur.

D'une manière générale, les cuiseurs vapeur comportent une enceinte de cuisson associée à un réservoir d'eau, l'eau du réservoir étant chauffée pour produire la vapeur servant à cuire les aliments contenus dans l'enceinte de cuisson. Ces appareils de cuisson à la vapeur comportent un moyen de chauffage électrique pour la production de vapeur à partir de l'eau du réservoir.

Lorsque l'eau a atteint sa température d'ébullition, la vapeur est produite en quantité importante, ce qui permet d'obtenir une température homogène à l'intérieur de l'enceinte de cuisson. L'enceinte de cuisson comporte généralement plusieurs chambres de cuisson superposées.

Il est connu du document WO2011/080673 de réaliser un cuiseur vapeur comportant une unité de génération de vapeur à puissance variable. Cet appareil permet de réaliser des cuissons vapeur à une température voisine de 100°C, telle que réalisée classiquement dans les cuiseurs vapeur à pression atmosphérique, dans lesquels l'enceinte de cuisson n'est pas pressurisée. Cet appareil permet aussi de réaliser des cuissons vapeur à des températures plus basses, par exemple de l'ordre de 80°C, pour mieux adapter la cuisson à l'aliment utilisé et/ou à la texture souhaitée. Toutefois ce document envisage seulement de pouvoir choisir la température de cuisson régnant à l'intérieur de l'enceinte.

L'objet de la présente invention est de proposer un dispositif de cuisson à la vapeur à la fois simple et efficace, tout en restant économique en coût et en énergie, et qui permette d'obtenir une enceinte de cuisson dans laquelle les chambres de cuisson peuvent présenter des températures différentes.

Pour la bonne compréhension, on considèrera que le haut correspond au haut des figures et que l'horizontal correspond à l'horizontal des figures.

Le dispositif de cuisson à la vapeur selon l'invention forme une enceinte de cuisson étagée à chambres de cuisson superposées, comprenant au moins une chambre de cuisson intermédiaire et une chambre de cuisson supérieure superposées, l'enceinte de cuisson comprenant :

- un fond intermédiaire présentant des ouvertures d'admission pour l'alimentation en vapeur de la chambre de cuisson intermédiaire et représentant une surface d'ouvertures $S_a$,
- un fond supérieur présentant des ouvertures de communication pour le passage de la vapeur de la chambre de cuisson intermédiaire vers la chambre de cuisson supérieure et représentant une surface d'ouvertures $S_c$,
- et des ouvertures supérieures d'échappement pour l'évacuation de la vapeur hors de la chambre de cuisson supérieure et représentant une surface d'ouvertures Se,

Il est caractérisé en ce que la surface d'ouvertures $S_c$ est au moins deux fois inférieure à la surface d'ouvertures $S_a$, et que la surface d'ouvertures Se est inférieure ou égale à la surface d'ouvertures $S_c$, de préférence inférieure ou égale aux deux tiers de la surface d'ouvertures $S_c$, et que la surface d'ouvertures Se est au moins supérieure ou égale au tiers de la surface d'ouvertures $S_c$, de préférence au moins supérieure ou égale à la moitié de la surface d'ouvertures $S_c$. Cette configuration du dispositif de cuisson à la vapeur permet de limiter la quantité de vapeur qui reste dans la chambre de cuisson supérieure et permet ainsi de constituer un étage spécifique à la cuisson lente ou à température modérée. En effet, le fond supérieur moins perforé que le fond intermédiaire permet de limiter la quantité de vapeur passant de la chambre de cuisson intermédiaire à la chambre de cuisson supérieure. De plus, la surface des ouvertures supérieures d'échappement est plus importante que celle rencontrée usuellement, de sorte qu'une saturation en vapeur de la chambre de cuisson intermédiaire ne permet pas nécessairement une saturation en vapeur de la chambre de cuisson supérieure, du fait des fuites de vapeur plus importante. Il en résulte que la température à l'intérieur de la chambre de cuisson supérieure peut se stabiliser dans une zone de température nettement inférieure à la température régnant à l'intérieur de la chambre de cuisson intermédiaire. Il est ainsi possible de réaliser simultanément dans un même dispositif de cuisson à la vapeur des cuissons à deux températures d'ambiance différentes. L'utilisateur peut ainsi obtenir des cuissons différentes. Il peut également choisir de confiner ou non la cuisson en fonction du type d'aliment.

Selon une caractéristique particulière, le fond supérieur est déversant. Il est important qu'il n'y ait pas de rétention d'eau dans la chambre de cuisson supérieure afin d'éviter le contact des aliments avec l'eau résiduelle. En effet les aliments en contact avec cette eau ne cuisent pas. On peut ainsi prévoir un fond présentant une pente vers les ouvertures de communication communiquant avec la chambre de cuisson intermédiaire.

Selon une autre caractéristique, le fond supérieur est bombé. Ainsi le fond ne garde pas d'eau qui est évacuée par les cotés de la partie bombée. Il sera possible d'utiliser un plateau de confinement avec sa partie bombée dirigée vers le haut comme fond supérieur.

Selon une disposition particulière, le fond supérieur présente un angle d'au moins 1° par rapport à l'horizontale. Cet angle est minimum pour permettre l'écoulement de l'eau résiduelle.

Selon une autre disposition, une grille est disposée au dessus du fond supérieur. Cette grille permet d'éviter le contact des aliments avec toute eau résiduelle qui pourrait apparaitre dans la chambre de cuisson supérieure.

Selon une caractéristique particulière, les ouvertures de communication ne sont placées qu'en périphérie du fond supérieur. Ces ouvertures permettent le passage de la vapeur et l'évacuation tout en permettant de garder la chaleur au centre du fond.

Avantageusement, le fond supérieur est porté de manière amovible par une paroi latérale de la chambre de cuisson supérieure. L'ensemble constitue ainsi un bol de cuisson plus facile à utiliser car il permet le transport des aliments lorsque l'on retire le bol de cuisson.

Selon un mode de réalisation, le dispositif de cuisson à la vapeur comprend un dispositif de production de vapeur comprenant des moyens électriques de chauffe intégrés pour produire la vapeur et un réservoir d'eau relié auxdits moyens électriques de chauffe.

Selon une caractéristique particulière, le dispositif de production de vapeur comprend des moyens de commande de la puissance de chauffe des moyens électriques de chauffe. Le débit de vapeur issu du dispositif de production de vapeur peut ainsi être adapté en fonction des cuissons souhaitées.

Selon une forme de réalisation avantageuse, les moyens de commande comportent au moins un programme de chauffe comportant une étape de préchauffage suivie d'une étape de chauffe dans laquelle la puissance moyenne de chauffe des moyens électriques de chauffe est inférieure à la puissance moyenne de chauffe utilisée pour l'étape de préchauffage. Cette disposition permet une montée en température plus rapide à l'intérieur de l'enceinte de cuisson.

Avantageusement alors, l'étape de préchauffage est une étape de saturation totale des chambres de cuisson en vapeur. Cette disposition permet de mieux contrôler la température dans la chambre de cuisson supérieure lors de l'étape de chauffe.

Selon une autre caractéristique, les moyens de commande comprennent un système de réglage de chauffe dans lequel le nombre de chambres de cuisson utilisées est renseigné. Le système peut ainsi réguler la puissance de chauffe nécessaire pour atteindre la température nécessaire dans chacune des chambres de cuisson.

Selon une caractéristique particulière, l'étape de préchauffage a une durée qui dépend du nombre de chambres de cuisson renseigné. L'étape de saturation sera d'autant plus longue que le nombre de chambres de cuisson est important. Ce nombre est en général compris entre 2 ou 3.

Selon une autre caractéristique, les moyens de commande comprennent un système de réglage de chauffe dans lequel une quantité d'aliments est renseignée. Le système de réglage peut ainsi déterminer la puissance nécessaire à la cuisson de ces aliments.

Selon une autre caractéristique, les moyens de commande comprennent un système de réglage de chauffe dans lequel une nature d'aliments est renseignée, ce qui permet de déterminer la puissance nécessaire à la cuisson desdits aliments.

D'autres avantages pourront encore apparaître à l'homme du métier à la lecture des exemples ci-dessous, illustrés par les figures annexées, donnés uniquement à titre d'exemple.

- La figure 1 est une vue en perspective d'un dispositif de cuisson à la vapeur selon l'invention,
- La figure 2 est une vue de dessus d'un couvercle de l'état de la technique,
- La figure 3 est une vue de dessus d'un couvercle selon l'invention,
- La figure 4 est une vue en coupe du dispositif de cuisson à la vapeur selon l'invention,
- La figure 5 est une vue en perspective d'un fond supérieur selon l'invention,
- La figure 6 est une vue en perspective d'un fond intermédiaire,
- La figure 7 est un graphique montrant l'évolution de la température en fonction du temps dans deux chambres de cuisson.

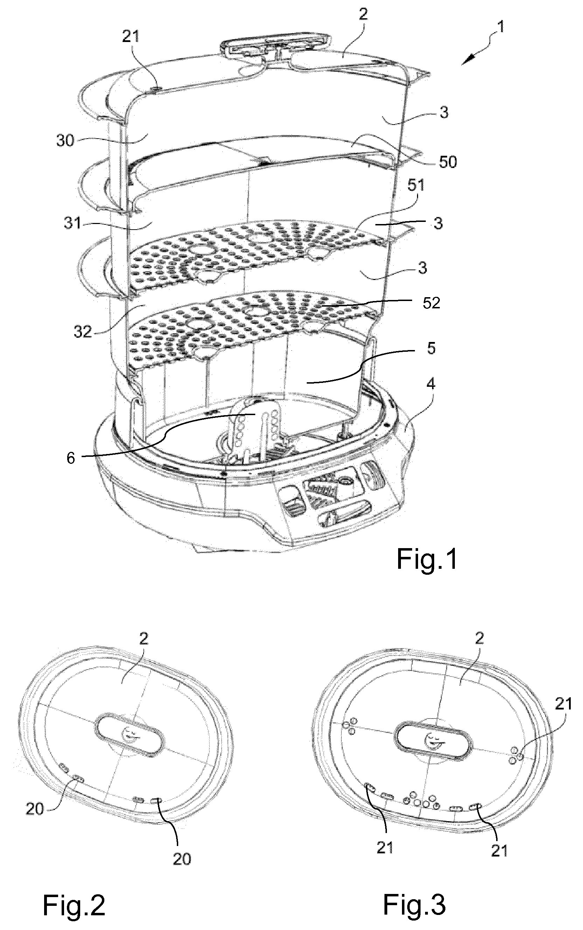

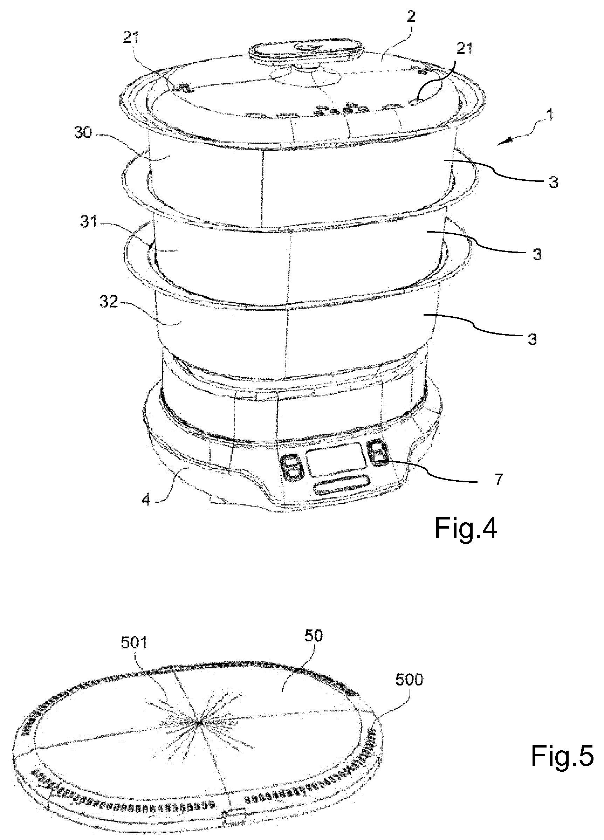

Le dispositif de cuisson à la vapeur 1 illustré sur les figures 1 et 4 forme une enceinte de cuisson étagée. Le dispositif de cuisson à la vapeur 1 comprend un couvercle 2 et plusieurs chambres de cuisson 3 superposées constituant une enceinte de cuisson étagée. Le dispositif de cuisson à la vapeur 1 comprend également une base 4 comprenant des moyens de production de vapeur. La base 4 loge un réservoir d'eau 5 ainsi que des moyens électriques de chauffe 6. Le dispositif de cuisson à la vapeur 1 comprend ainsi un dispositif de production de vapeur comprenant les moyens électriques de chauffe 6 intégrés pour produire la vapeur et le réservoir d'eau 5 relié auxdits moyens électriques de chauffe 6.

Dans l'exemple de réalisation illustré sur la figure 1, les moyens électriques de chauffe 6 sont formés par un élément chauffant agencé dans le réservoir d'eau 5. A titre de variante, le réservoir d'eau 5 pourrait notamment alimenter une chaudière comprenant des moyens électriques de chauffe, par gravité ou au moyen d'une pompe.

Les chambres de cuisson 3 comprennent un fond et une paroi latérale. Dans l'exemple de réalisation illustré sur la figure 1, les fonds sont amovibles par rapport aux parois latérales, et sont portés par les parois latérales. A titre de variante, au moins un des fonds pourrait notamment porter l'une des parois latérale, ou être monté fixe par rapport à l'une des parois latérales.

L'enceinte de cuisson du dispositif de cuisson à la vapeur 1 illustré sur les figures 1 et 4 comprend trois chambres de cuisson 3 superposées. Une chambre de cuisson supérieure 30 est placée au-dessus d'un fond supérieur 50. Une chambre de cuisson intermédiaire 31 est placée au-dessous du fond supérieur 50 et au dessus d'un fond intermédiaire 51. Une chambre de cuisson inférieure 32 est placée sous le fond intermédiaire 51 et au dessus d'un fond inférieur 52. Il est possible de placer la chambre de cuisson intermédiaire 31 directement sur la base 4, dans ce cas le fond intermédiaire 51 est placé dessus les éléments de production de vapeur. Si désiré, un bac récupérateur à jus (non représenté sur la figure 1) peut être disposé entre la base 4 et les chambres de cuisson 3.

Le fond inférieur 52 et le fond intermédiaire 51 sont largement ajourés de manière à permettre la progression de la vapeur de la base 4 au travers de la chambre de cuisson inférieure 32 puis de la chambre de cuisson intermédiaire 31. Le fond supérieur 50 est moins ajouré et présente une partie centrale non perforée entourée par une partie périphérique perforée pour permettre la cuisson d'aliments hors du jus, tel que représenté sur la figure 1. Le fond supérieur 50 est porté de manière amovible par une paroi latérale de la chambre de cuisson supérieure 30 et peut avantageusement être retourné pour cuire les aliments dans leur jus.

Comme visible sur les figures 2 et 3, le couvercle 2 présente des ouvertures supérieures d'échappement 20 ou 21 pour permettre l'évacuation de la vapeur hors de la chambre de cuisson supérieure 30 afin de limiter la pression à l'intérieur de l'enceinte de cuisson. On constate que le nombre des ouvertures supérieures d'échappement 21 de l'invention (figure 3) est beaucoup plus important que le nombre des ouvertures supérieures d'échappement 20 de l'état de la technique (figure 2). Ainsi la surface d'ouvertures Se des ouvertures supérieures d'échappement 21 du couvercle 2 selon l'invention est plus importante que la surface d'ouvertures Se des ouvertures supérieures d'échappement 20 du couvercle 2 selon l'art antérieur.

Le fond supérieur 50, illustré sur la figure 5, comporte des ouvertures de communication 500 pour le passage de la vapeur de la chambre de cuisson intermédiaire 31 vers la chambre de cuisson supérieure 30. Tel qu'exposé précédemment, les ouvertures de communication 500 sont placées en périphérie. Avantageusement les ouvertures de communication 500 ne sont placées qu'en périphérie du fond supérieur 50. Les ouvertures de communication 500 représentent une surface d'ouvertures $S_c$.

Le fond supérieur 50 est avantageusement déversant pour pouvoir cuire les aliments hors de leur jus. Tel que visible sur la figure 1, le fond supérieur 50 est bombé. Tel que mieux visible sur la figure 5, le fond supérieur 50 a une partie bombée 501 située dans sa partie centrale. Le fond supérieur 50 présente un angle d'au moins 1° par rapport à l'horizontale.

Dans l'exemple de réalisation illustré sur les figures, le fond supérieur 50 forme un plateau de confinement. A titre de variante, le fond supérieur 50 peut comporter un plateau de confinement. A titre de variante, une grille peut être disposée au dessus du fond supérieur 50.

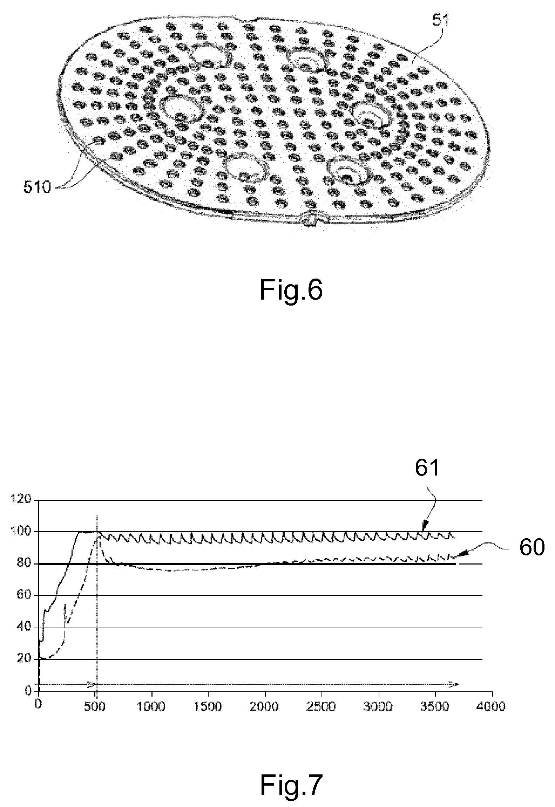

Le fond intermédiaire 51, visible sur la figure 6, comprend des ouvertures d'admission 510 pour l'alimentation en vapeur de la chambre de cuisson intermédiaire 31. Les ouvertures d'admission 510 sont réparties sur toute la surface du fond intermédiaire 51. Les ouvertures d'admission 510 permettent le passage de la vapeur de la chambre de cuisson inférieure 32, ou des moyens de production de vapeur, vers la chambre de cuisson intermédiaire 31. Les ouvertures d'admission 510 représentent une surface d'ouvertures $S_a$.

Pour pouvoir obtenir des températures inférieures à 100°C dans la chambre de cuisson supérieure 30, la surface d'ouvertures $S_c$ est au moins deux fois inférieure à la surface d'ouvertures $S_a$, la surface d'ouvertures Se est inférieure ou égale à la surface d'ouvertures $S_c$, de préférence inférieure ou égale aux deux tiers de la surface d'ouvertures $S_c$, et la surface d'ouvertures Se est au moins supérieure ou égale au tiers de la surface d'ouvertures $S_c$, et de préférence au moins supérieure ou égale à la moitié de la surface d'ouvertures $S_c$.

Le dispositif de production de vapeur du dispositif de cuisson à la vapeur 1 comprend avantageusement des moyens de commande 7 de la puissance de chauffe des moyens électriques de chauffe 6. Les moyens de commande 7 peuvent par exemple comporter un relais piloté par des programmes de chauffe prédéterminés et/ou utiliser un capteur de température pour alimenter ou non les moyens électriques de chauffe 6. Si désiré, les moyens électriques de chauffe 6 peuvent être alimentés à différentes puissances, notamment en utilisant plusieurs éléments chauffants alimentés indépendamment ou simultanément.

La puissance des moyens électriques de chauffe 6 est de préférence dimensionnée pour fournir un flux de vapeur permettant d'élever la température de la chambre de cuisson inférieure 32 et de la chambre de cuisson intermédiaire 31 jusqu'à la température de saturation de vapeur.

Selon une forme de réalisation préférée, les moyens de commande 7 comportent au moins un programme de chauffe comportant une étape de préchauffage suivie d'une étape de chauffe dans laquelle la puissance moyenne de chauffe des moyens électriques de chauffe 6 est inférieure à la puissance moyenne de chauffe utilisée pour l'étape de préchauffage.

Tel que représenté sur la figure 7, la courbe 60 illustrant la température dans la chambre de cuisson supérieure 30 suit avec retard la courbe 61 illustrant la température dans la chambre de cuisson intermédiaire 31. De manière préférée, l'étape de préchauffage est une étape de saturation totale des chambres de cuisson 3 en vapeur, de sorte que les deux courbes 60 et 61 se rejoignent après l'étape de préchauffage. La diminution de la puissance de chauffe lors de l'étape de chauffe permet de stabiliser la température dans la chambre de cuisson supérieure 30 à une valeur inférieure à 90°C, alors que la température dans la chambre de cuisson intermédiaire 31 reste de l'ordre de 100°C. Deux températures de cuisson peuvent ainsi être obtenues simultanément dans l'enceinte de cuisson.

Pour faciliter l'ajustement de la puissance des moyens de chauffe, les moyens de commande 7 peuvent comprendre un système de réglage de chauffe dans lequel le nombre de chambres de cuisson 3 utilisées est renseigné. Les moyens de commande 7 peuvent aussi comprendre un système de réglage de chauffe dans lequel une quantité d'aliments est renseignée et/ou une nature d'aliments est renseignée.

Le mode de fonctionement du dispositif de cuisson à la vapeur 1 est le suivant :

- L'utilisateur place les aliments à cuire dans les différentes chambres de cuisson 3 en fonction du degré de cuisson désiré, les aliments devant être plus fondants ou plus croquants étant placés dans la chambre de cuisson supérieure 30,
- Il met en marche le dispositif de production de vapeur,
- La vapeur monte de la chambre de cuisson inférieure 32 vers la chambre de cuisson intermédiaire 31 puis vers la chambre de cuisson supérieure 30 avant de s'échapper par les ouvertures supérieures d'échappement 21.

L'utilisateur peut renseigner le nombre de chambres de cuisson 3 utilisées afin d'optimiser le cycle de chauffe qui pourra être plus court s'il y a moins de chambres de cuisson 3 à chauffer.

Le système de réglage de chauffe programme la chauffe de l'eau placée dans le réservoir d'eau 5 afin de produire de la vapeur. Le système a un programme de cycles avec une première étape de saturation totale des chambres de cuisson 3 à une température de saturation qui est en général de 100°C.

La chambre de cuisson supérieure 30 chauffe avec retard par rapport à la chambre de cuisson intermédiaire 31, du fait que la chambre de cuisson supérieure 30 est alimentée en vapeur par la chambre de cuisson intermédiaire 31 par des ouvertures de communication 500 présentant une surface totale plus restreinte que les ouvertures d'admission 510 permettant l'alimentation en vapeur de la chambre de cuisson intermédiaire 31, et que les ouvertures supérieures d'échappement 21 du couvercle 2 sont plus importantes que dans les cuiseurs vapeurs usuels.

On constate ainsi, comme illustré figure 7, que la montée en température de la chambre de cuisson supérieure 30 est décalée par rapport à la chambre de cuisson intermédiaire 31.

Le programme de cycles comprend une deuxième étape de cuisson où la température de cuisson est inférieure à la température de saturation dans la chambre de cuisson supérieure 30, par exemple 80°C. Cette température de cuisson de la chambre de cuisson supérieure 30 est obtenue grâce à la combinaison du fond supérieur 50 peu perforé par rapport à un fond classique tel que le fond intermédiaire 51 et le couvercle 2 présentant plus d'ouvertures supérieures d'échapppement 21 qu'un couvercle classique. Dans l'étape de cuisson, le débit de vapeur est plus faible que lors de l'étape de préchauffage et ne permet plus la saturation en vapeur de la chambre de cuisson supérieure 30. La température dans la chambre de cuisson supérieure 30 peut alors devenir inférieure à la température de saturation de vapeur d'au moins 5°C, et jusqu'à 20°C inférieure, voire 25°C à 30°C.

Pour garantir une température constante dans la chambre de cuisson supérieure 30, il est important de gérer le taux de fuite global de la chambre de cuisson supérieure 30 et de le combiner avec ce cycle particulier. Ainsi la chambre de cuisson supérieure 30 avec une surface d'entrée $S_c$ et une surface de sortie Se, telle que

$$S_c \leq \tfrac{1}{2} S_i$$

$S_e \leq S_c$, de préférence $S_e \leq 2/3\ S_c$
et que
$S_e \geq 1/3\ S_c$, de préférence $S_e \geq 1/2\ S_c$
permet d'obtenir une circulation de vapeur telle que la température dans cette chambre de cuisson supérieure 30 est plus faible que celle de la chambre de cuisson intermédiaire 31, de l'ordre de 20°C dans l'exemple de réalisation présenté.

D'autres modifications peuvent être apportées à l'invention sans sortir du cadre de la présente invention.

**Revendications**

1. Dispositif de cuisson à la vapeur (1) formant une enceinte de cuisson étagée à chambres de cuisson (3) superposées, comprenant au moins une chambre de cuisson intermédiaire (31) et une chambre de cuisson supérieure (30) superposées, l'enceinte de cuisson comprenant :

   - un fond intermédiaire (51) présentant des ouvertures d'admission (510) pour l'alimentation en vapeur de la chambre de cuisson intermédiaire (31) et représentant une surface d'ouvertures $S_a$,
   - un fond supérieur (50) présentant des ouvertures de communication (500) pour le passage de la vapeur de la chambre de cuisson intermédiaire (31) vers la chambre de cuisson supérieure (30) et représentant une surface d'ouvertures $S_c$,
   - et des ouvertures supérieures d'échappement (21) pour l'évacuation de la vapeur hors de la chambre de cuisson supérieure (30) et représentant une surface d'ouvertures Se,

   **caractérisé en ce que** la surface d'ouvertures $S_c$ est au moins deux fois inférieure à la surface d'ouvertures $S_a$, et
   que la surface d'ouvertures Se est inférieure ou égale à la surface d'ouvertures $S_c$, de préférence inférieure ou égale aux deux tiers de la surface d'ouvertures $S_c$, et

que la surface d'ouvertures Se est au moins supérieure ou égale au tiers de la surface d'ouvertures $S_c$, de préférence au moins supérieure ou égale à la moitié de la surface d'ouvertures $S_c$.

**2.** Dispositif de cuisson à la vapeur (1) selon la revendication 1 **caractérisé en ce que** le fond supérieur (50) est déversant.

**3.** Dispositif de cuisson à la vapeur (1) selon l'une des revendications 1 ou 2, **caractérisé en ce que** le fond supérieur (50) est bombé.

**4.** Dispositif de cuisson à la vapeur (1) selon l'une des revendications 1 à 3, **caractérisé en ce que** le fond supérieur (50) présente un angle d'au moins 1° par rapport à l'horizontale.

**5.** Dispositif de cuisson à la vapeur (1) selon l'une des revendications 1 à 4, **caractérisé en ce qu'**une grille est disposée au dessus du fond supérieur (50).

**6.** Dispositif de cuisson à la vapeur (1) selon l'une des revendications 1 à 5, **caractérisé en ce que** les ouvertures de communication (500) ne sont placées qu'en périphérie du fond supérieur (50).

**7.** Dispositif de cuisson à la vapeur (1) selon l'une des revendications 1 à 6, **caractérisé en ce que** le fond supérieur (50) est porté de manière amovible par une paroi latérale de la chambre de cuisson supérieure (30).

**8.** Dispositif de cuisson à la vapeur (1) selon l'une des revendications 1 à 7, **caractérisé en ce qu'**il comprend un dispositif de production de vapeur comprenant des moyens électriques de chauffe (6) intégrés pour produire la vapeur et un réservoir d'eau (5) relié auxdits moyens électriques de chauffe (6).

**9.** Dispositif de cuisson à la vapeur (1) selon la revendication 8, **caractérisé en ce que** le dispositif de production de vapeur comprend des moyens de commande (7) de la puissance de chauffe des moyens électriques de chauffe (6).

**10.** Dispositif de cuisson à la vapeur (1) selon la revendication 9, **caractérisé en ce que** les moyens de commande (7) comportent au moins un programme de chauffe comportant une étape de préchauffage suivie d'une étape de chauffe dans laquelle la puissance moyenne de chauffe des moyens électriques de chauffe (6) est inférieure à la puissance moyenne de chauffe utilisée pour l'étape de préchauffage.

**11.** Dispositif de cuisson à la vapeur (1) selon la revendication 10, **caractérisé en ce que** l'étape de préchauffage est une étape de saturation totale des chambres de cuisson (3) en vapeur.

**12.** Dispositif de cuisson à la vapeur (1) selon l'une des revendications 9 à 11, **caractérisé en ce que** les moyens de commande (7) comprennent un système de réglage de chauffe dans lequel le nombre de chambres de cuisson (3) utilisées est renseigné.

**13.** Dispositif de cuisson à la vapeur (1) selon la revendication 12 et l'une des revendications 10 ou 11, **caractérisé en ce que** l'étape de préchauffage a une durée qui dépend du nombre de chambres de cuisson (3) renseigné.

**14.** Dispositif de cuisson à la vapeur (1) selon une des revendications 9 à 13 **caractérisé en ce que** les moyens de commande (7) comprennent un système de réglage de chauffe dans lequel une quantité d'aliments est renseignée.

**15.** Dispositif de cuisson à la vapeur (1) selon une des revendications 9 à 14 **caractérisé en ce que** les moyens de commande (7) comprennent un système de réglage de chauffe dans lequel une nature d'aliments est renseignée.

**Patentansprüche**

**1.** Dampfgarvorrichtung (1), die einen mehrstufigen Garbereich mit übereinanderliegenden Garkammern (3) bildet und mindestens eine übereinanderliegende mittlere Garkammer (31) und obere Garkammer (30) umfasst, wobei der Garbereich Folgendes beinhaltet:

 - einen Zwischenboden (51) mit Einlassöffnungen (510) für die Dampfversorgung der mittleren Garkammer (31) und einer Fläche mit Öffnungen $S_a$,
 - einen oberen Boden (50) mit Verbindungsöffnungen (500) für den Dampfdurchlass von der mittleren Garkammer (31) zur oberen Garkammer (30) und einer Fläche mit Öffnungen $S_c$
 - sowie obere Austrittsöffnungen (21) für den Dampfauslass außerhalb der oberen Garkammer (30) mit einer Fläche mit Öffnungen $S_e$,

**dadurch gekennzeichnet, dass** die Fläche mit Öffnungen $S_c$ mindestens doppelt so klein ist wie die Fläche mit Öffnungen $S_a$ und die Fläche mit Öffnungen $S_e$ kleiner als die Fläche mit Öffnungen $S_c$ oder mit dieser identisch ist, vorzugsweise kleiner als zwei Drittel der Fläche mit Öffnungen $S_c$ oder identisch mit zwei Dritteln dieser, und dass die Fläche mit Öffnungen $S_e$ mindestens größer als ein Drittel der Fläche mit Öffnungen $S_c$ oder identisch mit einem Drittel dieser ist, vorzugsweise mindestens größer als die Hälfte der Fläche mit Öffnungen $S_c$ oder identisch mit der Hälfte dieser.

2. Dampfgarvorrichtung (1) nach Anspruch 1, **dadurch gekennzeichnet, dass** der obere Boden (50) gekrümmt ist.

3. Dampfgarvorrichtung (1) nach einem der Ansprüche 1 oder 2, **dadurch gekennzeichnet, dass** der obere Boden (50) gewölbt ist.

4. Dampfgarvorrichtung (1) nach einem der Ansprüche 1 bis 3, **dadurch gekennzeichnet, dass** der obere Boden (50) einen Winkel von mindestens 1° zur Horizontalen aufweist.

5. Dampfgarvorrichtung (1) nach einem der Ansprüche 1 bis 4, **dadurch gekennzeichnet, dass** über dem oberen Boden (50) ein Gitter angebracht ist.

6. Dampfgarvorrichtung (1) nach einem der Ansprüche 1 bis 5, **dadurch gekennzeichnet, dass** sich die Verbindungsöffnungen (500) ausschließlich am Umfang des oberen Bodens (50) befinden.

7. Dampfgarvorrichtung (1) nach einem der Ansprüche 1 bis 6, **dadurch gekennzeichnet, dass** der obere Boden (50) abnehmbar durch eine Seitenwand der oberen Garkammer (30) getragen wird.

8. Dampfgarvorrichtung (1) nach einem der Ansprüche 1 bis 7, **dadurch gekennzeichnet, dass** sie eine Vorrichtung zur Dampferzeugung mit integrierten elektrischen Heizmitteln (6) zur Dampferzeugung und einen Wassertank (5) umfasst, der mit den vorgenannten elektrischen Heizmitteln (6) verbunden ist.

9. Dampfgarvorrichtung (1) nach Anspruch 8, **dadurch gekennzeichnet, dass** die Vorrichtung zur Dampferzeugung Mittel zur Steuerung (7) der Heizleistung der elektrischen Heizmittel (6) umfasst.

10. Dampfgarvorrichtung (1) nach Anspruch 9, **dadurch gekennzeichnet, dass** die Steuerungsmittel (7) mindestens ein Heizprogramm mit einer Aufheizphase und einer Heizphase umfassen, wobei die durchschnittliche Heizleistung der elektrischen Heizmittel (6) bei letzterer geringer ist als die während der Aufheizphase verwendete durchschnittliche Heizleistung.

11. Dampfgarvorrichtung (1) nach Anspruch 10, **dadurch gekennzeichnet, dass** es sich bei der Aufheizphase um eine Phase der vollständigen Sättigung der Garkammern (3) mit Dampf handelt.

12. Dampfgarvorrichtung (1) nach einem der Ansprüche 9 bis 11, **dadurch gekennzeichnet, dass** die Steuerungsmittel (7) ein System zur Wärmeregulierung beinhalten, bei dem die Anzahl der verwendeten Garkammern (3) erfasst wird.

13. Dampfgarvorrichtung (1) nach Anspruch 12 und einem der Ansprüche 10 oder 11, **dadurch gekennzeichnet, dass** die Länge der Aufheizphase von der erfassten Anzahl genutzter Garkammern (3) abhängt.

14. Dampfgarvorrichtung (1) nach einem der Ansprüche 9 bis 13, **dadurch gekennzeichnet, dass** die Steuerungsmittel (7) ein System zur Wärmeregulierung beinhalten, bei dem die Menge der Lebensmittel erfasst wird.

15. Dampfgarvorrichtung (1) nach einem der Ansprüche 9 bis 14, **dadurch gekennzeichnet, dass** die Steuerungsmittel (7) ein System zur Wärmeregulierung beinhalten, bei dem die Art der Lebensmittel erfasst wird.

**Claims**

1. Steam cooking device (1) forming a tiered cooking enclosure with cooking chambers (3) placed on top of one another with at least one intermediate cooking chamber (31) and one upper cooking chamber (30) placed on top of one another, with the cooking enclosure including:

- an intermediate base (51) having inlet openings (510) for the supply of steam to the intermediate cooking chamber (31) and representing a surface area of openings $S_a$,
- an upper base (50) having connecting openings (500) for the passage of steam from the intermediate cooking chamber (31) to the upper cooking chamber (30) and representing a surface area of openings $S_c$,
- and upper outlet openings (21) for the removal of steam from the upper cooking chamber (30) and representing a surface area of openings $S_e$,

**characterized in that** the surface area of openings $S_c$ is at least two times smaller than the surface area of openings $S_a$ and that the surface area of openings $S_e$ is smaller than or the same size as the surface area of openings $S_c$, preferably smaller than or equal to two thirds of the surface area of openings $S_c$, and that the surface area of openings $S_e$ is at least larger than or equal to one third of the surface area of openings $S_c$, preferably at least larger than or equal to half the surface area of openings $S_c$.

2. Steam cooking device (1) according to claim 1 **char-**

**acterized in that** the upper base (50) is for pouring.

3. Steam cooking device (1) according to claim 1 or 2 **characterized in that** the upper base (50) is rounded.

4. Steam cooking device (1) according to one of claims 1 to 3 **characterized in that** the upper base (50) has an angle of at least 1° from the horizontal plane.

5. Steam cooking device (1) according to one of claims 1 to 4 **characterized in that** a grid is positioned above the upper base (50).

6. Steam cooking device (1) according to one of claims 1 to 5 **characterized in that** the connecting openings (500) are only placed on the outer edge of the upper base (50).

7. Steam cooking device (1) according to one of claims 1 to 6 **characterized in that** the upper base (50) is removable and held by a side wall of the upper cooking chamber (30).

8. Steam cooking device (1) according to one of claims 1 to 7 **characterized in that** it comprises a steam generating device comprising integrated electric heating means (6) to generate steam and a water tank (5) connected to said electric heating means (6).

9. Steam cooking device (1) according to claim 8 **characterized in that** the steam generating device comprises the control means (7) of the heating power of the electric heating means (6).

10. Steam cooking device (1) according to claim 9 **characterized in that** the control means (7) comprise at least one heating program comprising a preheating stage followed by a heating stage wherein the average heating power of the electric heating means (6) is less than the average heating power used for the preheating stage.

11. Steam cooking device (1) according to claim 10 **characterized in that** the preheating stage is a stage of total saturation of the cooking chambers (3) with steam.

12. Steam cooking device (1) according to one of claims 9 to 11 **characterized in that** the control means (7) comprise a heating control system wherein the number of cooking chambers (3) used is communicated.

13. Steam cooking device (1) according to claim 12 and claim 10 or 11 **characterized in that** the duration of the preheating stage depends on the number of cooking chambers (3) communicated.

14. Steam cooking device (1) according to one of claims 9 to 13 **characterized in that** the control means (7) comprise a heating control system wherein a food amount is communicated.

15. Steam cooking device (1) according to one of claims 9 to 14 **characterized in that** the control means (7) comprise a heating control system wherein the type of food is communicated.

Fig.1

Fig.2

Fig.3

21    2    21

30

31

32

1

3

3

3

4    7

## Fig.4

501    50    500

## Fig.5

Fig.6

Fig.7

**EP 2 883 482 B1**

## RÉFÉRENCES CITÉES DANS LA DESCRIPTION

**Documents brevets cités dans la description**

- WO 2011080673 A